Europäisches Patentamt

**European Patent Office**

**Office européen des brevets**

(11) Publication number: **0 088 628**
**B1**

(12) **EUROPEAN PATENT SPECIFICATION**

(45) Date of publication of patent specification: **02.08.89**

(21) Application number: **83301234.7**

(22) Date of filing: **08.03.83**

(51) Int. Cl.⁴: **G 01 N 30/88**

(54) **Automated metal detection.**

(30) Priority: **09.03.82 AU 3026/82**

(43) Date of publication of application:
**14.09.83 Bulletin 83/37**

(45) Publication of the grant of the patent:
**02.08.89 Bulletin 89/31**

(84) Designated Contracting States:
**CH DE FR GB IT LI NL SE**

(56) References cited:
**EP-A-0 040 798**
**DE-A-2 457 566**
**DE-A-2 505 255**
**DE-B-2 711 989**

**Chemical Abstracts vol. 85, no. 12, 20
September 1976, Columbus, Ohio, USA; page
617, column 2, abstract no. 86802c & JP-A-50-
15393**

(73) Proprietor: **THE COMMONWEALTH OF
AUSTRALIA
c/o the Secretary Department of Defence Supply
Anzac Park West Building Constitution Avenue
Parkes
Canberra Australian Capital Territory 2600 (AU)**

(72) Inventor: **Bond, Alan M.
Deakin University
Waurn Ponds Victoria (AU)**
Inventor: **Wallace, Gordon G.
Deakin University
Waurn Ponds Victoria (AU)**
Inventor: **McLachlan, Lyle
c/o Commonwealth Ordnance Factory West
Road
Maribrynong Victoria (AU)**

(74) Representative: **Newby, John Ross et al
J.Y. & G.W. Johnson Furnival House 14/18 High
Holborn
London WC1V 6DE (GB)**

Courier Press, Leamington Spa, England.

## Description

This invention relates to apparatus for the detection and quantification of heavy metals in solution.

The detection and removal of heavy metals from solution has, in recent times, assumed increasing importance from the viewpoint of environmental protection and associated health problems. For example when metals such as nickel, copper or chromium are employed in processing operations it is essential, owing to their toxic nature, to reduce to a minimum the quantities that are discharged to the atmosphere, in whatever form, including liquid effluents that are discharged to water courses. It is also important to ensure that the concentration of these, and the many other toxic elements, in water courses do not rise above the maximum levels as set down in environmental protection policies. In fact the means of monitoring metals from industrial plant plays a key role in the control of industrial process to prevent undesirable concentration of pollutants from occurring. Whilst the above example demonstrates an area where it is important to minimise heavy metals in solution, other fields exist where the requirement is to retain heavy metals in solution within set limits. The mining industry is an example of this.

Many other areas do exist where it is important to be able to determine the levels of heavy metals in solution. Sometimes because of the geography of a water catchment and the inherent features of a water body itself, the background level of the ground water is already outside the limits as set down by the local water authority. Other times the background level of the groundwater is initially within prescribed limits but moves outside these limits through some associated change in the water course further upstream. In both instances it is important to be able to determine the background level both quickly and efficiently.

As a further example where it is important to be able to quantify the levels of heavy metal in solution, is that of human health; such as in the determination of the heavy metals lead, mercury or cadmium in human blood.

In relation to the control of pollution by metals such as chromium, copper, nickel, cadmium, iron, cobalt, lead, etc. it is conventional to take samples on site and then analyse these samples in a laboratory. Generally, the quantative method of analysis is made either by using a suitable electrochemical technique or by using atomic absorption spectroscopy. Conventional analyses require skilled personnel to operate them, and accordingly they are not field compatible.

The difficulty with conventional heavy metal analysis systems is that they are essentially discontinuous, and because a laboratory pretreatment and analysis is required delays of several days are possible before results can be obtained. In terms of pollution control, detection of high concentrations of heavy metals in effluent several days after effluent release, is unacceptable.

Another difficulty is that frequently only one heavy metal can be detected at a time and this is inadequate where effluents will usually contain several heavy metal contaminants.

GB—A—1488039 discloses a method and apparatus for the quantitative automated analysis of ionic species using both an anion and a cation exchange resin bed. The disclosure includes the use of a computer-controller programmed to inject samples carried in an eluant into a selected one of the beds and to control valves to determine whether it is a standard calibrating solution, or a solution under test which is fed as sample to the respective bed or whether a bactericide solution is used to sterilise the sample conveying line of the apparatus. The output from both beds is assessed in a conductivity cell connected to a conductivity meter and, via the computer-controller to a print-out means. This disclosure is not concerned with the detection of heavy metals.

EP—A—0040798 discloses the use of a liquid chromatographic column for the detection of copper, magnesium and cobalt ions and a controller is used to coordinate the injection of a sample into the column and the operation of a recorder monitoring the output from a photometer receiving sample/eluant from the column. EP—A—0040798 is concerned with rendering transparent ions detectable in a photometer and not with the provision of a sampling and analyzing apparatus which automatically collects samples and scans the output of the column at a predetermined interval after sample injection to monitor for specified heavy metal ions in the manner proposed by this invention.

DE—B—2,711,989 discloses apparatus for the automatic periodic detection and quantitative estimation of heavy metals in water which may contain heavy metals as contaminants. The apparatus comprises an electrochemical cell analyzer in which the heavy metals in samples of the water are quantitatively estimated by sequential application of a constant negative DC voltage to precipitate the heavy metals or one or more of them at a solid platinum metal electrode followed, after replacement of the water sample by an electrolytic solution, by application of a constant positive DC voltage to redissolve the precipitated heavy metals by anodic oxidation. The apparatus also includes means for collecting the samples and introducing them individually in predetermined amounts into the apparatus for passage to the analyzer, and programmable control means which is electrically connected to the introduction means and the analyzer and is preprogrammed so that periodically at predetermined intervals a first control signal is passed to the introduction means to introduce a sample into the apparatus for passage to the analyzer and a further control signal is afterwards passed to the analyzer to initiate the analysis in the analyzer by application of an appropriate voltage to an appropriate electrode of the cell. The programmable control means is also preprogrammed to process the quantities detected in the analyzer in the analysis operations on the different samples for display in readable form, and the apparatus further includes display means electrically connected to the programmable control means for displaying in readable form the quantities estimated in the analyzer. The apparatus disclosed in DE—B—2,711,989 is generally used for the global determination of the total amount of heavy metal ions in each sample by a single precipitation/dissolution cycle, but it is stated that it is possible, by proper choice of suitable precipitation and dissolution voltage, to determine the metals selectively or by groups.

The present invention seeks to provide apparatus which can be used for the automatic periodic detection and quantitative estimation of the separate concentrations of a plurality of heavy metals which may be present as contaminants in a solution.

According to the present invention there is provided apparatus for the automatic periodic detection and quantitative estimation of heavy metals in a solution which may contain one or more of a plurality of heavy metals as contaminants, comprising

an electrochemical cell analyzer (7) for quantitatively estimating heavy metals in samples of the solution,

means (2) for collecting the samples and introducing them individually in predetermined amounts into the apparatus for passage to the analyzer (7),

programmable control means (9) which is electrically connected to the introduction means (2) and the analyzer (7) and is preprogrammed so that periodically at predetermined intervals a first control signal is passed to the introduction means (2) to introduce a sample into the apparatus for passage to the analyzer (7) and a further control signal is afterwards passed to the analyzer to initiate the analysis by application of an appropriate voltage to an appropriate electrode of the cell, and which is also preprogrammed to process the quantities detected in the analyzer (7) in the analysis operations for display in readable form, and

display means (19) electrically connected to the programmable control means (9) for displaying in readable form the quantities estimated in the analyzer (7),

characterised in that, in order to be able to measure the separate concentrations of a plurality of heavy metals which may be present in the sample,

a) the apparatus includes a chromatographic column (4) arranged to receive each individual sample from the introduction means (2) contained in a liquid chromatographic eluant and to provide chromatographic separation of heavy metals in the sample prior to passing the separated sample to the analyzer (7) in the flowing eluant,

b) the introduction means (2) is designed to inject each individual sample into the flowing liquid chromatographic eluant,

c) the programmable control means (9) is designed so that one or a plurality of further control signals is passed to the analyzer (7) at respectively one or each of a plurality of predetermined time delays after introduction of the individual sample into the apparatus for passage through the chromatographic column (4) to the analyzer (7), said time delay(s) corresponding to the expected time of passage of respectively the or each of the plurality of heavy metals to be detected in the individual sample through the chromatographic column to the analyzer, the or each of said plurality of further control signals actuating in the electrochemical cell analyzer the particular electrode with the predetermined voltage applicable to obtaining optimum sensitivity in measuring the concentration of the heavy metals having the time delay in question in the flowing eluant by means of a potentiostat,

d) the programmable control means is also preprogrammed to receive the measurements from the potentiostat and to store them so as to provide averaging of the readings over a predetermined period, and

e) the display means is arranged to display in readable form each of the quantities for the separate heavy metals detected in the analyzer (7) relating to the individual samples and processed in the programmable control means, and further characterised in that the apparatus is portable and is capable of being operated by the programmable control means (9) according to the methods of differential pulse, normal pulse or direct current voltametry.

By using a chromatographic column the metals in solution are separated into distinct elutes which pass in a predictable time period into the analyser which is controlled by a programmable control means (microprocessor) preprogrammed to determine the presence of a particular metal at each predicted time period that has elapsed after injection of the sample into the column. By providing means for automatically separating metal ions into a form acceptable for analysis of concentration of one metal at a time it has been possible to produce apparatus that can be preprogrammed to automatically and continuously monitor metal concentration levels in effluent solutions.

Generally the chromatographic column is a reverse phase column with an optional ion exchange guard column to remove any unwanted ions. However, by using suitable solvents and chelating agents, many other types of chromatographic columns may be used, e.g. those of the normal phase or ionic type. Similarly, whereas in the following examples the solvents used are of liquid chromatographic grade and are acetonitrile and/or methanol mixtures containing a buffer agent, this does not imply that many other solvents or buffers cannot be used. A typical solvent composition, chelating agent, chromatographic column and buffer agent will be determined by the particular metal to be detected. As an analyser any suitable detection system can be used which provides determination in a reasonably short time span. For example, differential pulse, normal pulse, or direct current voltammetry in an electrochemical cell, using different working electrodes such as glassy carbon, platinum, gold or mercury and/or a UV/visible spectrophotometer may be employed.

The programmable control means may be any conventional microprocessor and is wired into the apparatus to monitor injection times, retention periods, and the reading from the analyser. Each metal to be detected usually requires different potentials to be applied to the electrodes to obtain maximum sensitivity in detection. Accordingly the microprocessor is programmed with information relating the retention times in the column of each metal to be detected with the potentials and pulse periods to be applied to the electrodes of the analyser to measure the presence of that particular metal. Thus the retention period acts as a trigger to ensure that the analyser is detecting the appropriate metal. Preferably the programmable control means is also programmed to average the readings for each metal over a predetermined period. Thus where the injector collects a sample from effluent twenty times per hour there will be 20 readings per hour produced by the analyser for each metal in the effluent. These twenty readings may be averaged by the microprocessor to give an hourly average concentration of each metal in the effluent. Such readings when monitored by process operators can enable the process conditions to be carefully controlled to ensure all effluent is maintained within environmentally acceptable limits.

The invention will be further described with reference to the accompanying drawings, in which:

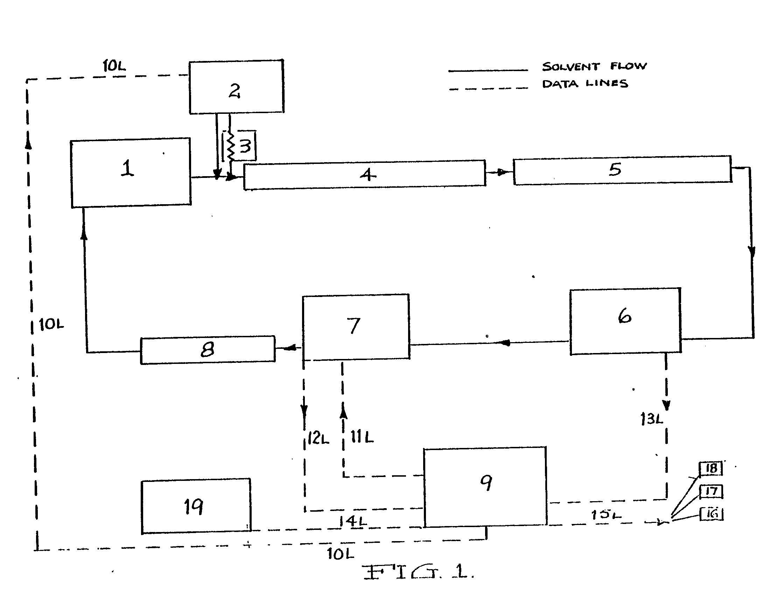

Figure 1 is a schematic diagram of a preferred form of apparatus according to the invention, and the remaining Figures (2 to 10c) are graphic results obtained from apparatus according to the invention with a variety of different metal-containing solutions as will be described hereafter.

The chromatographic solvent 1 is a solvent capable of effecting formation (where necessary) and separation of the metal complexes. The complexes, and the free ligand, must be stable in this solvent and it must be a solvent compatible with the detection systems employed. The chromatographic solvent is delivered to the system by means of a pump (*solvent delivery pump*) with precision flow rate control.

The solvent often used is (LC) grade acetonitrile containing aqueous buffer. A complexing agent such as sodium diethyldithiocarbamate is usually included in the solvent.

For automated operation the sample loop 2 is filled by a pump, the sample loop is then flushed by the chromatographic solvent at the time of injection which is predetermined by the operator. One mode of sample loading is available whereby the complex is formed by addition of ligand in an appropriate solvent (*deposition solvent*). The sample loop, in this mode, contains a small column capable of trapping the metal complex allowing the solvent in which it is formed to pass through. Then, at the time of injection a solvent (*eluting solvent*) capable of eluting the metal complexes with the small column is used to flush the sample onto the separator column. Depending on the ratio eluting solvent: deposition solvent a concentration/dilution of the sample can be effected.

The injection system comprises a pump and a pump inlet located in, for example, an effluent stream injects a predetermined sample quantity of effluent into the solvent delivery conduit. The injection system operates on a periodic base e.g. 3 to 5 minutes and thus takes samples from e.g. an effluent stream e.g. 12 to 20 times per hour.

The reactor 3 is a device wherein metal complex formation occurs if it has not already done so.

The separator column 4 is a means of separating the metal complexes from one another, in the chromatographic solvent, enabling them to enter the detector(s) one at a time hence minimizing interferences. This chromographic column can be a C-18 μ Bondapak (Registered Trade Mark) column of internal diameter 3.9 mm and 30 cm length.

The suppressor column 5 comprises an ion exchange resin and is used to remove excess ligand which may react unfavourably in the detector system(s) employed. The result is improved detector performance.

The detection system consists of two detectors in series, a microcomputer and visual display means such as a video display screen or a printer. The detectors are:

(i) a UV-visible spectrophotometer 6 wherein the metal complexes are monitored on their ability to absorb energy in the UV-visible region of the spectrum;

(ii) an electrochemical (E.C.) detector 7 wherein the metal complexes are monitored on their ability to undergo an electrochemical reaction.

The UV-visible spectrophotometric detector is in series with the flow through electrochemical cell which has an electrode composed of platinum or gold or glassy carbon. Different electrodes and different voltages can be used according to the metal to be determined. A potential waveform is applied to the electrode to determine through the current measurements the concentration of metal ions in the electrolyte. The electrochemical cell may be used alone but the spectrophotometric detector may be used in series to give simultaneous measurements. Because it is a more robust detector, the spectrophotometer provides a ready check for accuracy of measurement of the electrochemical cell.

A potentiostat is used to make these measurements.

The clean up column 8 is a low pressure device containing chromatographic resin capable of removing metal complexes from the chromatographic solvent rendering it "clean" in order that it may be recycled a finite number of times.

The key control means for the apparatus is the microprocessor 9 which is programmed with information to respond to the injection of a sample and to retention time measurements which the microprocessor receives and is then programmed to respond to. The microprocessor also controls the potentiostat. The response for each particular retention time is to actuate in the electrochemical cell the particular electrode with the predetermined voltage applicable to obtaining optimum sensitivity in measuring the concentration of the metal which has the retention time received. The microprocessor is then programmed to receive the measurements from the potentiostat which measurements are stored so

4

that averaging of the readings over a predetermined period can be made. These averaged readings are then sent as signals to the recorder which incorporates a printer. The readings provide an indication of the presence of all the metals which the microprocessor is programmed to detect and provides up to 20 readings per hour. The number of readings is determined by the maximum retention period of the metals to be measured. In most applications there are only 3 or 4 metals to be analysed but this will generally depend on the nature of the industrial processes giving rise to the effluent.

The microprocessor 9 also controls the injection stage via a line 10 (when to inject, flushing period for loop/concentrator etc.). It is capable of monitoring the background level(s) in the detector(s) and indicating to the operator when to renew the chromatographic solvent. It is capable of providing an electrode cleaning potential waveform for the electrochemical detector. It is capable of providing a monitoring potential waveform to the E.C. detector 7 via a line 11L, collecting/manipulating data from both detectors via lines 12L, 13L and providing a range of alarms (via line 15L and devices 16, 17, 18 Fig. 1). A readout device 19 may be any type of visual display but a printer is preferred and is connected to the microprocessor 9 via a line 14L.

This invention has a number of advantages principally:

1. This system can be used for metal analysis with multi-element capabilities—enabling fast analysis times.

2. The system is portable, making bench use as well as field use conceivable.

3. The system is adapted to be run off mains (240V) or battery power (12V).

4. The sampling system is microprocessor controlled and is used to control the detection system with respect to control of monitoring parameters and data acquisition/manipulation.

5. The microprocessor can be used to monitor background current/absorbance indicating when it is necessary to change chromatographic solvent.

6. The microprocessor can be used to provide an electrode cleaning potential waveform.

7. The suppressor column lowers the background level of the detector(s) by removal of any excess ligand.

8. The clean up column removes the metal complexes from the chromatographic solvent after detection—enabling recycling of solvent.

The following examples further explain this invention.

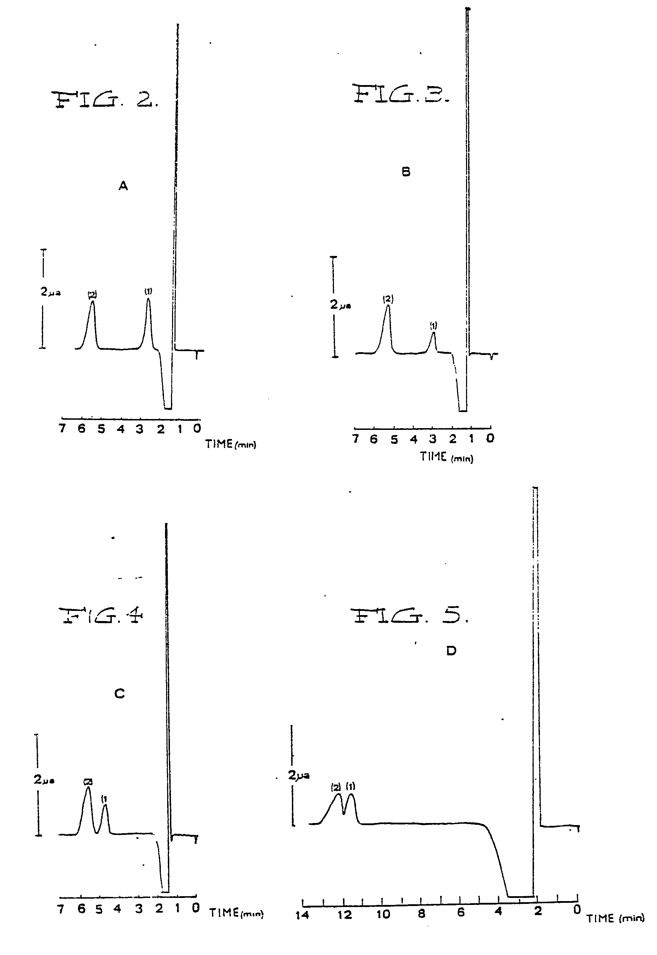

Figures 2, 3, 4 and 5 are reference examples of graphical results of electrochemical analysis of solutions containing heavy metals. Peaks due to (A) Fig. 2 cadmium(II), (B) Fig. 3 lead(III), (C) Fig. 4 cobalt (III), and (D) Fig. 5 iron (III) were observed using D.C. voltage of +0.6 V vs Ag/AgCl with a gold electrode and forming $Cu(pydtc)_2$ in situ for detection of 20 μl of a $5 \times 10^{-4}$ M copper nitrate solution. Peak 2 corresponds to copper and peak 1 to another element present in a 10 fold concentration excess. Flow rate =2 ml/min for Figs. 2, 3, and 4 and 1 ml/min for Fig. 5.

The following two tables provide an example of the detection methods used in relation to nickel and copper.

TABLE 1

Comparison of electrochemical and spectrophotometric detectors

| | Spectrophotometric | | | Normal pulse (−0.10 to +0.25) V | Electrochemical[a] | |
| --- | --- | --- | --- | --- | --- | --- |
| | λ=423 nm | λ=40 nm | λ=320 nm | | DC (+0.20 V) | DC (+0.70 V) |
| Nickel Detection limit (ng) | 2.0 | 0.5 | 0.2 | 0.1 | 0.2 | 0.1 |
| Linear response range (ng) | 0—150 | 0—150 | 0—150 | 0—50 | 0—50 | 0—100 |
| Copper Detection limit (ng) | 0.4 | 0.8 | 1.0 | 1.0 | 1.0 | 0.2 |
| Linear response range (ng) | 0—150 | 0—150 | 0—150 | 0—50 | 0—50 | 0—100 |

Injection volume=10 μl. Solvent flow=1 ml/min. Solvent system: 70% acetonitrile: 30% acetate buffer (0.02 M), pH=6, .01 M $NaNO_3$, $2 \times 10^{-4}$ M $[dedtc]^-$.

[a] Potentials, V vs Ag/AgCl (3 M NaCl). Detection limits and dynamic ranges for LC-4 thin layer cell. Linear response range increased in Metrohm wall jet detector (lower RC), although detection limits not as low.

TABLE 2
Determination of nickel and copper by liquid chromatographic technique and
atomatic absorption spectrometry.

| | Atomic absorption spectrometry[a] | | Liquid chromatography electrochemical detection[b] | | Liquid chromatography spectrophotometric detection ($\lambda=400$ nm) | |
|---|---|---|---|---|---|---|
| | Ni (ppm) | Cu (ppm) | Ni (ppm) | Cu (ppm) | Ni (ppm) | Cu (ppm) |
| Drinking water | 0.05 | 0.85 | 0.05 | 0.80 | 0.05 | 0.80 |
| Urn water | 0.05 | 0.05 | 0.05 | 0.10 | 0.05 | not detectable |
| Industrial effluent | 0.50 | 0.25 | 0.50 | 0.20 | 0.50[c] | 0.20[c] |
| Copper refinery[d] 1 | (e) | 4100 | (e) | 4200 | (e) | 4200 |
| Copper refinery[d] 2 | (e) | 1200 | (e) | 1220 | (e) | 1200 |
| Copper refinery[d] 3 | (e) | 2.10 | (e) | 2.20 | (e) | 2.10 |

[a] Air-acetylene flame, $\lambda=341.5$ nm for Ni, $\lambda=327.4$ nm for Cu.

[b] DC potential monitored at +0.70 V. Identical results (within experimental error) were obtained for DC=+0.20 V or normal pulse (−0.10 to +0.25 V), (monitoring of ligand wave), for all samples. Differential pulse mode for determining copper in copper refineries samples also provided results quoted.

[c] $\lambda=423$ nm for $Cu^{2+}$ determination. $\lambda=320$ nm for $Ni^{2+}$ determination.

[d] Sample diluted 100 fold prior to determination.

[e] Problem involved determination of copper in presence of very large excess of nickel (e.g. nickel 20 g $l^{-1}$). Nickel concentration not determined. On line method based in liquid chromatography used same conditions and solvent system as for Table 1 except for Copper Refineries sample where 55% acetonitrile: 45% acetate buffer or 70% methanol: 30% acetate buffer was used instead of 70% acetonitrile: 30% acetate buffer.

Example 1

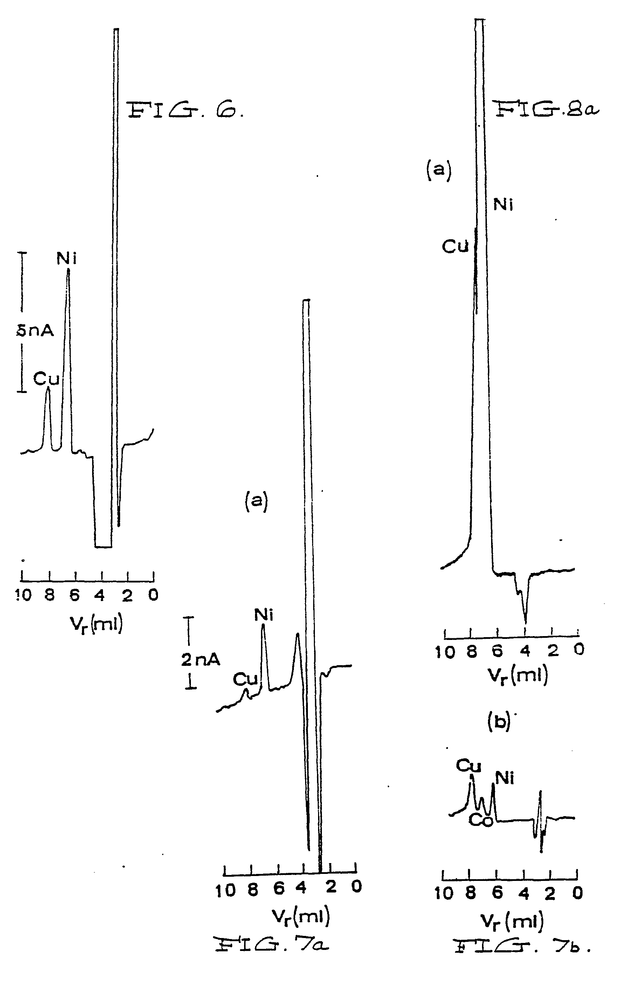

The chromatogram illustrated in Figure 6 shows separation of nickel and copper as dithiocarbamates. Chromatographic eluent was 70% acetonitrile:30% acetate (0.02 $M$ pH=6, 0.005 $M$ $NaNO_3$, $10^{-4}$ $M$ [dedtc]⁻. Flow rate=1 ml/min. Detection: the DC response was monitored at +0.75 V vs Ag/AgCl. Injection: 10 µl of sample containing 2 ppm of $Ni^{2+}$ and 2 ppm of $Cu^{2+}$.

Example 2

Determination of a metal refinery sample, injection volume=10 µl. Readout obtained for (a) electrochemical detection, (conditions as in Example 1) shown in Figure 7a, (b) UV detection, $\lambda=400$ nm, (solvent and other chromatographic conditions as in Example 1) shown in Figure 7b.

Example 3

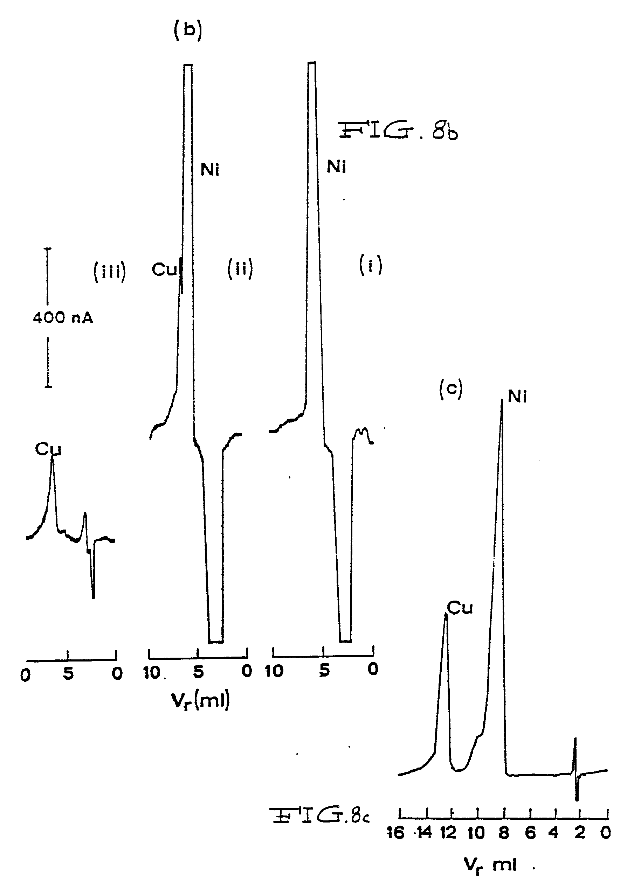

Determination of a copper refinery sample (2). (a) UV detection, $\lambda=420$ nm, solvent and other chromatographic conditions as in Example 1, injection volume=10 µl, results shown in Figure 8a, (b) electrochemical detection applying a pulse waveform, shown in Figure 8b. Initial potential=400 mV, final potential=480 mV, delay between pulses=1 sec, pulse duration=0.40 sec; (i) DC component, (II) Pulse component, (iii) differential pulse component. Injection volume=10 µl. (c) UV detection, $\lambda=420$ nm, shown in Figure 8c, same conditions as in Example 1 except that acetonitrile has been replaced by methanol and the injection volume=3 µl.

Example 4

Multielement Determination using HPLCEC as shown in Figure 9. Synthetic sample using conditions described in Example 3(b) but with a flow rate of 2 ml/min. Injection: 10 µl containing 10 ng Copper (II) (peak 6), chromium (III) (peak 5), cobalt (peak 4), chromium (VI) (peak 3), and 5 ng nickel (peak 2). Peak 1 is due to oxidation of thiuram disulfide.

Example 5

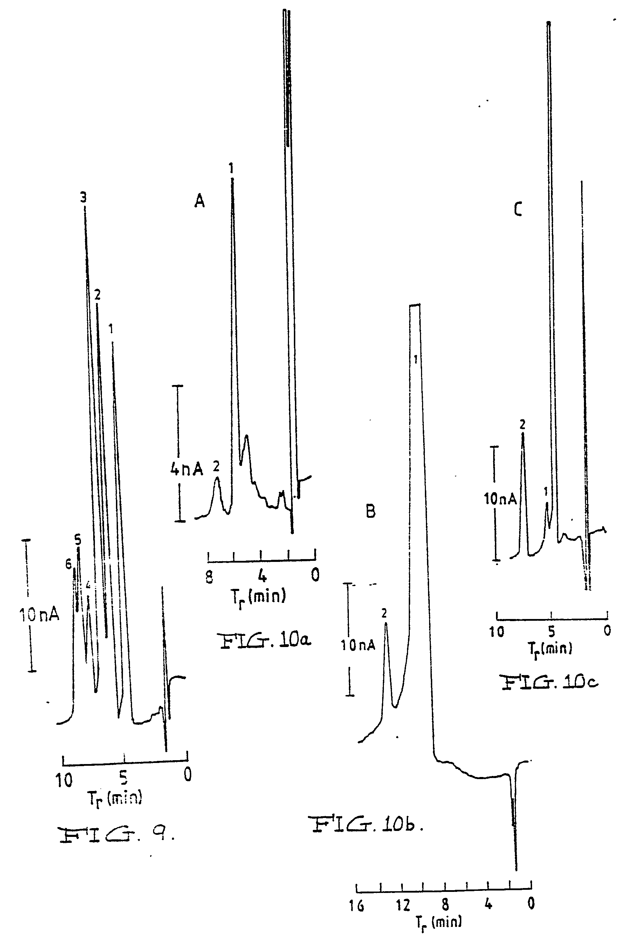

Determination of Metals in Industrial Samples. (a) Simultaneous Determination of Copper and Nickel with $2\times10^{-4}$ $M$ [pydtc]⁻ in solvent. Flow rate of 1.5 ml/min. Detection: Bioanalytical Services Detector Cell, glassy carbon working electrode. DC response monitored at +0.70 V vs Ag/AgCl. (A) Injection: 10 µl sample obtained from a Nickel Refinery, without pretreatment as shown in Figure 10a. Determined: 0.70 ppm nickel (peak 1); 0.03 ppm copper (peak 2). (B) Determination of Copper in presence of very high concentrations of Nickel as shown in Figure 10b. with $10^{-3}$ $M$ [dedtc]$^-$ in solvent, flow rate of 1.5 ml/min. Detection: Normal Pulse waveform applied +0.10 to +0.20 V; duration between pulses=0.5 s. Pulse width=20 ms. Metrohm Detector Cell. Injection: 10 µl sample of electrolyte obtained from a Copper Refinery, after 100 fold dilution. Determined: 3 ppm copper (peak 2) in presence of 0.02 g/l nickel (peak 1) with values referred to diluted sample. (C) Simultaneous Determination of Chromium (III) and Chromium (VI) as shown in Figure 10c. using [dedtc]$^-$ as ligand. Flow rate 2 ml/min. Detection: Bioanalytical Services Detector Cell. Glassy carbon working electrode. DC response monitored at +1.2 V vs Ag/AgCl. Injection: 10 µl sample supplied by Ordnance Factory, Maribyrnong, Victoria, Australia. Determined: 1.0 ppm chromium (III) (10 ng) (peak 2); 0.05 ppm chromium (VI) (0.5 ng) (peak 1).

It can be seen that this invention provides apparatus which by its nature needs no operator control and only requires periodical filling of the solvent storage tank and monitoring of the readings. Also it can be placed in situ adjacent an effluent outlet to provide continuous monitoring which has not been possible with conventional techniques.

**Claims**

1. Apparatus for the automatic periodic detection and quantitative estimation of heavy metals in a solution which may contain one or more of a plurality of heavy metals as contaminants, comprising
an electrochemical cell analyzer (7) for quantitatively estimating heavy metals in samples of the solution,
means (2) for collecting the samples and introducing them individually in predetermined amounts into the apparatus for passage to the analyzer (7),
programmable control means (9) which is electrically connected to the introduction means (2) and the analyzer (7) and is preprogrammed so that periodically at predetermined intervals a first control signal is passed to the introduction means (2) to introduce a sample into the apparatus for passage to the analyzer (7) and a further control signal is afterwards passed to the analyzer to initiate the analysis by application of an appropriate voltage to an appropriate electrode of the cell, and which is also preprogrammed to process the quantities detected in the analyzer (7) in the analysis operations for display in readable form, and
display means (19) electrically connected to the programmable control means (9) for displaying in readable form the quantities estimated in the analyzer (7),
characterised in that, in order to be able to measure the separate concentrations of a plurality of heavy metals which may be present in the sample,
a) the apparatus includes a chromatographic column (4) arranged to receive each individual sample from the introduction means (2) contained in a liquid chromatographic eluant and to provide chromatgraphic separation of heavy metals in the sample prior to passing the separated sample to the analyzer (7) in the flowing eluant,
b) the introduction means (2) is designed to inject each individual sample into the flowing liquid chromatographic eluant,
c) the programmable control means (9) is designed so that one or a plurality of further control signals is passed to the analyzer (7) at respectively one or each of a plurality of predetermined time delays after introduction of the individual sample into the apparatus for passage through the chromatographic column (4) to the analyzer (7), said time delay(s) corresponding to the expected time of passage of respectively the or each of the plurality of heavy metals to be detected in the individual sample through the chromatographic column to the analyzer, the or each of said plurality of control signals actuating in the electrochemical cell analyzer the particular electrode with the predetermined voltage applicable to obtaining optimum sensitivity in measuring the concentration of the heavy metal having the time delay in question in the flowing eluant by means of a potentiostat,
d) the programmable control means is also preprogrammed to receive the measurements from the potentiostat and to store them so as to provide averaging of the readings over a predetermined period, and
e) the display means is arranged to display in readable form each of the quantities for the separate heavy metals detected in the analyzer (7) relating to the individual samples and processed in the programmable control means, and further characterised in that the apparatus is portable and is capable of being operated by the programmable control means (9) according to the methods of differential pulse, normal pulse or direct current voltametry.

2. Apparatus as claimed in claim 1, characterised in that the analyzer (7) comprises a flow-through electrochemical cell with a preceding UV-spectrophotometer (6).

3. Apparatus as claimed in claim 1 or 2, characterised in that the chromatographic column (4) is a reverse phase column.

4. Apparatus as claimed in claim 1 or 2, characterised in that the chromoatographic column (4) is a normal phase column.

5. Apparatus as claimed in any of claims 1 to 4, characterised in that the liquid chromatographic eluant comprises a solvent and a ligand capable of reacting with one or more of the heavy metals to be detected and quantitatively estimated in the samples so as to form a metal/ligand complex facilitating chromatographic separation, and the introduction means (2) includes a mixing chamber (3) to allow for completion of the complex-forming reaction prior to introduction of the eluant plus sample into the chromatographic column (4).

6. Apparatus as claimed in claim 5, characterised in that the apparatus includes means (5) for removing excess ligand from the sample-containing eluant prior to its passage to the analyzer.

7. Apparatus as claimed in any of claims 1 to 6, characterised in that it includes a reservoir (1) for the eluant and a closed loop for returning eluant from the analyzer (7) to the reservoir (1) via means (8) for removing impurities therefrom.

8. Apparatus as claimed in any of claims 1 to 7, characterised in that the introduction means (2) comprises a pump having an inlet through which the samples are collected from the solution to be analyzed and an outlet through which samples of uniform size are introduced into the apparatus.

9. Apparatus as claimed in any of claims 1 to 8, characterised in that the programmable control means (9) is programmed for the analysis of 3 or 4 different heavy metals by the analyzer (7).

10. Apparatus as claimed in any of claims 1 to 9, characterised in that glossy carbon or gold working electrodes are used.

11. Apparatus as claimed in any of claims 1 to 9, characterised in that platinum or mercury working electrodes are used.

12. Apparatus as claimed in any of claims 1 to 11, characterised in that the programmable control means (9) is also programmed to monitor the background level(s) in the detector(s) and to indicate to the operator when to renew the chromatographic solvent.

13. Apparatus as claimed in any of claims 1 to 12, characterised in that the programmable control means (9) is also programmed to provide an electrode cleaning potential waveform and a monitoring potential waveform to the electrochemical cell analyzer (7).

14. Apparatus as claim in any of claims 1 to 13, characterised in that the programmable control means (9) is also programmed to provide alarms depending on the quantities detected in the analyzer (7).

15. The use of apparatus as claimed in any of claims 1 to 14 for the separate quantitative estimation of a plurality of heavy metal contaminants in waste water or ground water.

16. The use as claimed in claim 15, wherein acetonitrile and/or methanol containing a buffer agent is used as liquid chromatographic eluant.

17. The use as claimed in claim 15 or 16, wherein the eluant contains sodium diethyldithiocarbamate as complexing agent.

**Patentansprüche**

1. Vorrichtung zum automatischen periodischen Nachweise sowie zur quantitativen Bestimmung von Schwermetallen in einer Lösung, die ein oder mehrere aus einer Mehrzahl von Schwermetallen als Verunreinigungen enthalten kann, bestehend aus

einem elektrochemischen Zellenanalysator (7) zur quantitativen Bestimmung von Schwermetallen in Proben der Lösung,

Geräten (2) zum Sammeln der Proben und zu deren individueller Einführung in vorbestimmten Mengen in die Vorrichtung zum Durchlauf zum Analysator (7),

einem programmierbaren Regelgerät (9), das mit dem Einführgerät (2) und dem Analysator (7) elektrisch verbunden und so vorprogrammiert ist, daß periodisch zu vorbestimmten Zeiten ein erstes Regelsignal an das Einführgerät (2) zur Einführung einer Probe in die Vorrichtung zum Durchlauf zum Analysator (7) und danach ein weiteres Regelsignal an den Analysator zum Ingangsetzen der Analyse durch Anlegen einer entsprechenden Spannung an eine entsprechende Elektrode der Zelle ausgegeben wird, und das ferner dazu vorprogrammiert ist, die im Analysator (7) bei den Analysenvorgängen nachgewiesenen Mengen zur Anzeige in lesbarer Form zu verarbeiten, und

einem Anzeigegerät (19), das mit dem programmierbaren Kontrollgerät (9) elektrisch verbunden ist, zur Anzeige der im Analysator (7) bestimmten Mengen in lesbarer Form,

dadurch gekennzeichnet, daß, damit die Konzentrationen einer Mehrzahl gegebenenfalls in der Probe vorliegender Schwermetalle getrennt gemessen werden können,

a) die Vorrichtung eine chromatographische Säule (4) einschließt, die zur Aufnahme jeder einzelnen, in einem flüssigen chromatographischen Laufmittel enthaltenen Probe aus dem Einführgerät (2) und zur Durchführung einer chromatographischen Trennung der Schwermetalle in der Probe vor dem Weitergabe der aufgetrennten Probe im strömenden Laufmittel zum Analysator (7) eingerichtet ist,

b) das Einführgerät (2) zur Injektion jeder einzelnen Probe in das strömende flüssige chromatographische Laufmittel ausgebildet ist,

c) das programmierbare Regelgerät (9) so ausgebildet ist, daß ein bzw. mehrere weitere Regelsignal(e) an den Analysator (7) nach einer bzw. jeder von mehreren vorbestimmten Totzeiten nach der Einführung der Einzelprobe in die Vorrichtung zum Durchlauf durch die chromatographische Säule (4) zum Analysator (7) abgegeben wird bzw. werden, wobei diese Totzeit(en) der erwarteten Durchlaufzeit eines bzw. jedes der Mehrzahl von in der Einzelprobe nachzuweisenden Schwermetallen durch die chromatographische Säule zum Analysator entspricht bzw. entsprechen, wobei das bzw. jedes der Mehrzahl weiterer Regelsignale in dem eletrochemischen Zellenanalysator die jeweilige Elektrode mit der vorbestimmten, zum Erreichen der

EP 0 088 628 B1

optimalen Empfindlichkeit bei der Messung der Konzentration des Schwermetalls mit der entsprechenden Totzeit im strömenden Laufmittel anzulegenden Spannung mittels eines Potentiostats ansteuert,

d) das programmierbar Kontrollgerät ferner daz vorprogrammiert ist, die Messungen vom Potentiostat zu empfangen und sie zu speichern, damit dadurch die Ablesungen über einen vorbestimmten Zeitraum gemittelt werden können, und

e) das Anzeigegerät dazu angeordnet ist, jede der im Analysator (7) nachgewiesenen und im programmierbaren Regelgerät verarbeiteten Mengen der getrennten Schwermetalle bezüglich der Einzelproben in lesbarer Form anzuzeigen, und

ferner dadurch gekennzeichnet, daß die Vorrichtung transportierbar ist und durch das programmierbare Regelgerät (9) nach der Differenzimpuls-, Normalimpulsoder Gleichstromvoltametriemethode betrieben werden kann.

2. Vorrichtung nach Anspruch 1, dadurch gekennzeichnet, daß der Analysator (7) aus einer elektrochemischen Durchflußzelle mit vorgeschaltetem UV-Spektrophotometer (6) besteht.

3. Apparatur nach Anspruch 1 oder 2, dadurch gekennzeichnet, daß die chromatographische Säure (4) eine Umkehrphasensäule ist.

4. Vorrichtung nach Anspruch 1 oder 2, dadurch gekennzeichnet, daß die chromatographische Säule (4) eine Normalphasensäule ist.

5. Vorrichtung nach einem der Ansprüche 1 bis 4, dadurch gekennzeichnet, daß das flüssige chromatographische Laufmittel aus einem Lösungsmittel und einem Liganden besteht, der zur Reaktion mit einem oder mehreren der nachzuweisenden und quantitativ zu bestimmenden Schwermetalle in den Proben unter Bildung eines die chromatographischen Trennung erleichternden Metall/Ligandenkomplexes befähigt ist, und das Einführgerät (2) eine Mischkammer (3) einschließt, um vollständige komplexbildende Reaktion von der Einführung des Laufmittels plus Probe in die chromatographische Säule (4) zu ermöglichen.

6. Vorrichtung nach Anspruch 5, dadurch gekennzeichnet, daß sie ferner Mittel (5) zum Entfernung überschüssigen Liganden aus dem probenhaltigen Laufmittel vor dessen Weiterführung zum Analysator enthält.

7. Vorrichung nach einem der Ansprüche 1 bis 6, dadurch gekennzeichnet, daß es ferner ein Reservoir (1) für das Laufmittel und einen geschlossenen Kreislauf zur Rückführung von Laufmittel aus dem Analysator (7) zum Reservoir (1) über eine Einrichtung (8) zur Entfernung von Verunreinigungen daraus enthält.

8. Vorrichtung nach einem der Ansprüche 1 bis 7, dadurch gekennzeichnet, daß das Einführgerät (2) aus einer Pumpe mit einem Einlaß, durch welche die Proben aus der zu analysierenden Lösung entnommen werden, und einem Auslaß, durch welchen Proben gleichförmiger Größe in die Vorrichtung eingeführt werden, besteht.

9. Vorrichtung nach einem der Ansprüche 1 bis 8, dadurch gekennzeichnet, daß das programmierbare Regelgarät (9) zur Analyse von 3 oder 4 verschiedenen Schwermetallen durch den Analysator (7) programmiert ist.

10. Vorrichtung nach einem der Ansprüche 1 bis 9, dadurch gekennzeichnet, daß Arbeitselektroden aus glasartigem Kohlenstoff oder Gold verwendet werden.

11. Vorrichtung nach einem der Ansprüche 1 bis 9, dadurch gekennzeichnet, daß Arbeitselektroden aus Platin oder Quecksilber verwendet werden.

12. Vorrichtung nach einem der Ansprüche 1 bis 11, dadurch gekennzeichnet, daß das programmierbare Regelgerät (9) ferner dazu programmiert ist, den bzw. die Grundpegel in dem bzw. den Detektor(en) zu überwachen und den Bedienungsmann zu warnen, wenn das chromatographische Laufmittel zu erneuern ist.

13. Vorrichtung nach einem der Ansprüche 1 bis 12, dadurch gekennzeichnet, daß das programmierbare Regelgerät (9) ferner dazu programmiert ist, dem elektrochemischen Zellenanalysator (7) eine Potentialwellenform zur Elektrodenreinigung und eine Potentialwellenform zur Überwachung zu liefern.

14. Vorrichtung nach einem der Ansprüche 1 bis 13, dadurch gekennzeichnet, daß das programmierbare Regelgerät (9) ferner dazu programmiert ist, je nach den im Analysator (7) nachgewiesenen Mengen Alarmsignale abzugeben.

15. Verwendung der Vorrichtung nach einem der Ansprüche 1 bis 14 zur getrennten quantitativen Bestimmung einer Mehrzahl von Schwermetallverunreinigungen in Abwasser oder Grundwasser.

16. Verwendung nach Anspruch 15, worin ein Puffermittel enthaltendes Acetonitril und/oder Methanol als flüssiges chromatographisches Laufmittel verwendet wird.

17. Verwendung nach Anspruch 15 oder 16, worin das Laufmittel Natrium-diäthyldithiocarbamat als Komplexbildner enthält.

**Revendications**

1. Appareil de détection périodique automatique et d'estimation quantitative des métaux lourds dans une solution qui peut contenir un ou plusieurs d'une pluralité de métaux lourds comme contaminants, comprenant

9

un analyseur (7) à celle électrochimique servant à estimer quantitativement les métaux lourds dans des échantillons de la solution,

un dispositif (2) servant à recueillir les échantillons et à les introduire individuellement dans l'appareil, en quantités prédéterminées, pour les faire passer vers l'analyser (7),

un dispositif de commande (9) programmable qui est raccordé électriquement au dispositif d'introduction (2) et à l'analyseur (7) et qui est préprogrammé pour que, périodiquement, à intervalles prédéterminés, un premier signal de commande soit envoyé vers le dispositif d'introduction (2) pour introduire un échantillon dans l'appareil pour le faire passer vers l'analyseur (7) et un autre signal de commande est ensuite envoyé vers l'analyseur pour amorcer l'analyse par application d'une tension appropriée à une électrode appropriée de la cellule, et qui est également préprogrammé pour traiter les quantités détectées dans l'analyseur (7), lors des opérations d'analyse, pour les afficher sous forme lisible, et

un dispositif d'affichage (19) raccordé électriquement au dispositif de commande (9) programmable servant à afficher sous forme lisible les quantités estimées dans l'analyseur (7),

caractérisé en ce que, afin de pouvoir mesurer les concentrations séparées d'une pluralité de métaux lourds pouvant être présents dans l'échantillon,

a) l'appareil contient une colonne chromatographique (4) disposée pour recevoir chaque échantillon individuel provenant du dispositif d'introduction (2) contenu dans un éluant chromatographique liquide et pour fournir une séparation chromatographique des métaux lourds dans l'échantillon avant d'envoyer l'échantillon séparé vers l'analyseur (7) dans le courant d'éluant,

b) le dispositif d'introduction (2) est conçu pour injecter chaque échantillon individuel dans le courant d'éluant chromatographique liquide,

e) le dispositif de commande (9) programmable est conçu pour qu'un ou plusieurs autres signaux de commande soient envoyés vers l'analyseur (7), respectivement à un ou à chacun d'une pluralité de temps de retard prédéterminés après l'introduction de l'échantillon individuel dans l'appareil pour le faire passer à travers la colonne chromatographique (4) vers l'analyseur (7), ce ou ces temps de retard correspondant au temps de passage prévu, respectivement d'un ou de chacun de la pluralité des métaux lourds à détecter dans l'échantillon individuel à travers la colonne chromatographique vers l'analyseur, le ou chacun de ladite pluralité d'autres signaux de commande manoeuvrant, dans l'analyseur à cellule électrochimique, l'électrode particulière avec la tension prédéterminée applicable pour obtenir la sensibilité optimum pour la mesure de la concentration du métal lourd présentant le temps de retard en question dans le courant d'éluant au moyen d'un potentiostat,

d) le dispositif de commande programmable est également préprogrammé pour recevoir les mesures du potentiostat et pour les stocker de manière à donner une moyenne des mesures sur une période prédéterminée, et

e) le dispositif d'affichage est disposé pour afficher, sous forme lisible, chacune des quantités des métaux lourds séparés décelés dans l'analyseur (7) relatives aux échantillons individuels et traitées dans le dispositif de commande programmable, et

caractérisé en outre en ce que l'appareil est portable et qu'il est capable de fonctionner au moyen du dispositif de commande (9) programmable selon les méthodes voltamétriques à impulsion différentielle, à impulsion normale ou à courant continu.

2. Appareil selon la revendication 1, caractérisé en ce que l'analyseur (7) comprend une cellule électrochimique à circulation précédée d'un spectrophotomètre UV (6).

3. Appareil selon la revendication 1 ou 2, caractérisé en ce que la colonne chromatographique (4) est une colonne en phase inverse.

4. Appareil selon la revendication 1 ou 2, caractérisé en ce que la colonne chromatographique (4) est une colonne à phase normale.

5. Appareil selon l'une quelconque des revendications 1 à 4, caractérisé en ce que l'éluant chromatographique liquide comprend un solvant et un ligand capables de réagir avec un ou plusieurs des métaux lourds à détecter et à estimer quantitativement dans les échantillons, de manière à former un complexe métal/ligand facilitant la séparation chromatographique, et le dispositif d'introduction (2) contient une chambre de mélange (3) servant à achever la réaction de formation du complexe avant l'introduction de l'éluant plus l'échantillon dans la colonne chromatographique (4).

6. Appareil selon la revendication 5, caractérisé en ce que l'appareil contient un dispositif (5) servant à éliminer l'excès de ligand de l'éluant contenant l'échantillon avant son passage vers l'analyseur.

7. Appareil selon l'une quelconque des revendications 1 à 6, caractérisé en ce qu'il contient un réservoir (1) pour l'éluant et une boucle fermée servant à renvoyer l'éluant depuis l'analyseur (7) vers le réservoir (1), par l'intermédiaire d'un dispositif (8) servant à en éliminer les impuretés.

8. Appareil selon l'une quelconque des revendications 1 à 7, caractérisé en ce que le dispositif d'introduction (2) comprend une pompe ayant une entrée par laquelle les échantillons sont prélevés de la solution à analyser et une sortie par laquelle des échantillons de taille uniforme sont introduits dans l'appareil.

9. Appareil selon l'une quelconque des revendications 1 à 8, caractérisé en ce que le dispositif de commande (9) programmable est programmé pour que l'analyseur (7) analyse 3 ou 4 métaux lourds différents.

10. Appareil selon l'une quelconque des revendications 1 à 9, caractérisé en ce qu'on utilise des électrodes de travail en carbone vitreux ou en or.

11. Appareil selon l'une quelconque des revendications 1 à 9, caractérisé en ce qu'on utilise des électrodes de travail en platine ou en mercure.

12. Appareil selon l'une quelconque des revendications 1 à 11, caractérisé en ce que le dispositif de commande (9) programmable est également programmé pour surveiller le ou les bruits de fond dans le ou les détecteurs et pour indiquer à l'opérateur le moment où il faut renouveler le solvant chromatographique.

13. Appareil selon l'une quelconque des revendications 1 à 12, caractérisé en ce que le dispositif de commande (9) programmable est également programmé pour fournir une onde de potentiel de nettoyage des électrodes et une onde de potentiel de contrôle à l'analyseur (7) à cellule électrochimique.

14. Appareil selon l'une quelconque des revendications 1 à 13, caractérisé en ce que le dispositif de commande (9) programmable est également programmé pour fournir des alarmes suivant les quantités détectées dans l'analyseur (7).

15. Utilisation de l'appareil selon l'une quelconque des revendications 1 à 14 pour l'estimation quantitative séparée d'une pluralité de métaux lourds contaminants dans des eaux d'égoût ou dans une nappe souterraine.

16. Utilisation selon la révendication 15, dans laquelle on utilise, comme éluant chromatographique liquide, de l'acétonitrile et/ou du méthanol contenant un agent tampon.

17. Utilisation selon la revendication 15 ou 16, dans laquelle l'éluant contient du diéthyldithiocarbamate de sodium comme agent complexant.

SOLVENT FLOW
DATA LINES

FIG. 1.

FIG. 2.

A

2μa

(2) (1)

7 6 5 4 3 2 1 0

TIME (min)

FIG. 3.

B

2μa

(2) (1)

7 6 5 4 3 2 1 0

TIME (min)

FIG. 4

C

2μa

(2) (1)

7 6 5 4 3 2 1 0  TIME (min)

FIG. 5.

D

2μa

(2) (1)

14 12 10 8 6 4 2 0  TIME (min)

FIG. 6.

FIG. 8a

FIG. 7a

FIG. 7b.

(b)

FIG. 8b

Ni

Ni

(iii)    Cu    (ii)    (i)

400 nA

Cu

(c)    Ni

Cu

| | | | | | |
0    5    0    10    5    0   10    5    0

$V_r$(ml)

FIG.8c

16 ·14  12  10   8   6   4   2   0

$V_r$  ml

EP 0 088 628 B1

FIG. 9.

FIG. 10a.

FIG. 10b.

FIG. 10c.

5